# EUROPEAN PATENT APPLICATION

(11) **EP 1 282 057 A1**
(43) Date of publication of application: **05.02.2003**
(21) Application number: 01922167.0
(22) Date of filing: 12.04.2001
(51) Int. Cl.: G06F 17/60, A47F 10/00

(54) **SALES PROMOTION METHOD AND SYSTEM FOR CARRYING OUT SAID METHOD**

(30) Priority: 14.04.2000 RU 2000109155
(71) Applicant: Azhimov, Boris Anatolievich, Moskovskaya obl. 141000 (RU)
(72) Inventor: Azhimov, Boris Anatolievich, Moskovskaya obl. 141000 (RU)
(74) Representative: W.P. Thompson & Co.
(86) International application number: RU0100146
(87) International publication number: WO01086537

(57) **Abstract**

A method is claimed comprising the following steps: setting up an association of the points of sale by means of associating said points of sale and admitting natural and legal persons as the association members, forming the association members database at the central control unit of said association, making available a personal data medium to each association member, said data medium containing privilege purchase information, and forming communication channels communicating said central control unit with each of the associated points of sale, providing each associated point of sale with a unit for receiving and processing information contained on each personal data medium, making available the personal data medium to a potential customer by an association member, allowing a discount according to the privilege purchase information contained on the data medium to the potential customer in case of a transaction made by him at the associated point of sale, subsequent paying an appropriate remuneration to the association member having made available the personal data medium. The system according to the invention comprises at least one data receiving and processing unit accommodated at the respective point of sale, and a central control unit accommodated at the association of the points of sale, said central control unit having a data display unit, a data input unit, a data receiving unit and a second processor unit having a memory with a database storage unit, a first input means connected to the output means of the data input unit, a second input means connected to the output of the data receiving unit, and an output means connected to the input means of the data display unit, each data receiving and processing unit having said data reading unit for reading information from the data medium, a data communication unit for communicating information to the central control unit, and said first processor unit having an input means connected to the output means of the data reading unit, and an output means connected to the input means of the data communication unit, said

## Description

### Field of Invention

The present invention relates to commerce, more particularly, to the method for promoting sales and the system for carrying out the same.

### Background Art

At present, points of sale quite frequently use discounts in order to attract customers and accelerate the turnover of commodities. Known methods for promoting sales are based on allowing the customer seasonal discounts, discounts for a particular kind of commodities and services, discounts for a value of purchase, as well as discounts forming part of discount systems. Both the manufacture of commodities and services and commercial organizations can give offer discounts using informational and advertising media.

For instance, a method is known for promoting sales by means of allowing a discount to a customer based on the value of purchase made, provided some specific commodity is purchased. A system comprising a terminal with a unit for reading commodity identification codes is used to carry out said method. Said terminal has an access to the files containing pricing information and other characteristics of each unit of commodity. Moreover, said terminal contains organized data relating to such a particular commodity, the purchase of which results in a discount for the whole value of purchase allowed to the customer; a calculating unit; a device for outputting the calculation results. (cf.: US Pat. #5,612,868 A, IPC: G 06 F 19/00, published March 18, 1997). Besides, it is known a method for sales of commodities according to which a customer is given an incentive to purchase a certain range of goods repeatedly by allowing him a discount for the consequent purchases. To this end, the identification code of a frequent customer of a certain point of sales and the information relating to all previous purchases made by said customer are inputted into a storage unit of a computer system of such point of sales. When the cost of the next purchase is to be calculated the customer identification code is inputted into the calculation terminal, the computer system processor analyses the customer's previous purchases, and in case a certain cost criterion has been met by the customer while making the previous purchases, a signal is generated according to which the customer is given an incentive in the form of discount for the current purchase (cf.: US Pat. #5,649,114 A, IPC: G 06F 17/60, published July 15, 1997).

Therefore, as follows from the above overview, despite a big number of different methods for promoting sales of commodities and services are known, a customer has to spend time for the marketing of a particular segment of the market in order to determine on his own the advantages of one or another commercial organization allowing one or another form of discount for its commodity. Moreover, while said methods of sales can rouse a potential customer's interest by allowing a discount for a fixed value of a certain range of goods, however, they do not provide the customer with information relating to the quality and advantages of the commodity being sold. To inform the customer personally on the advantages of precisely the particular commodity with respect to the cost and quality thereof, and the advantages of precisely the particular trading company a method based on the "network marketing" system has been worked out with the view of accelerating the turnover of commodities. In accordance with said method a trading company sets up a network of independent distributors, each of which shall buy the products from said company and by appealing personally to each of a plurality of potential customers and advertising precisely these products sets up both its own network of customers to whom the company's products are sold at the prices providing said distributor's financial incentive, and a network of retailers, the activity of each of whom also brings profit to said independent distributor in the form of a certain percentage of the value of the products bought from the trading company.

Therefore, the problem of informing the customer personally of the advantages of a commodity was solved by means of financially interested and motivated retailers, as well as efficient spreading of information on commodities was achieved. However, each independent distributor in this case deals directly with commodities and must have initial capital to buy commodities form the trading company.

As a prototype a method for promoting sales of a particular range of goods was chosen, wherein organized data (for example, in the form of a flyer) are made available to a potential customer via different means (mail, e-mail or direct contact), upon presenting said data at a particular point of sales and after processing the information contained therein a customer is allowed to purchase a particular range of goods with a discount from the value (cf.: US Pat. #5,612,527, IPC: G 06K 15/00, published March 18, 1997).

Therefore, said method of sales based on attracting a potential customer by means of giving him a discount from a fixed value of a particular range of goods cannot let a potential customer be informed personally of the advantages of the quality of the offered commodity taking into account the preferences of a potential customer, his habits and means, and the distributors of the organized data (for example, flyers) have no reasonable financial motivation to convince a potential customer.

It is known a system used for promoting sales, comprising a processor unit having a memory containing a customer database, database for commodities to which the offers for discount sale apply, a unit for reading information from the organized data, for example, from a data medium and a data indication unit, at least one organized data medium, for example, customer personal data medium. The input of said processor unit is connected to the outputs of the unit for reading information from the data medium, and the output of the processor unit is connected to the inputs of the indication unit (cf.: US Pat. #5,857,175 A, IPC: G 06F 17/60, published January 05, 1999). Said system is used to carry out the above-mentioned method of sales, however, its elements cannot enable financially motivated personal presentation of information about a commodity.

### Disclosure of the Invention

The object of the present invention is to ensure financially motivated terms for a personalized provision of a wide range of information about a commodity in order to create a method for promoting sales and a system for carrying out the same which would prove to be economically efficient in the field of manufacture and marketing of goods for a retailer, as well as a distributor of information and a customer.

The technical effect that can achieved by means of the proposed method for promoting sales and the system for carrying out the same consists in the possibility to make a profit by a person just having made available in a personified manner the information on a possible discount for purchase of a high quality commodity, rather than by one involved directly in the purchase and sale.

Said object is achieved by means of the method for promoting sales comprising the following steps: making available to a potential customer a data medium containing privilege purchase information, processing said information at a point of sales in the course of a transaction made by said potential customer at said point of sales, allowing a discount according to the privilege purchase information contained on said data medium to said potential customer, wherein prior to making available to said potential customer said data medium containing said privilege purchase information an association of said points of sale is set up, natural and legal person are admitted as the members of said association, a database for the members of said association is formed within a central control unit of the association, the personal data medium is made available to each member of the association, communication channels are formed between said central control unit and each of the points of sale equipped with a data receiving and processing unit for receiving and processing of the information contained on each personal data medium; said personal data medium is made available to said potential customer by each member of the association who supplies the personal data medium or a part there to the potential customer, said information processing at the point of sale in the course of said transaction made by said potential customer at said point of sales is carried out by inputted into said data receiving and processing unit of the respective point of sale the information contained on the personal data medium of a part thereof supplied to the potential customer, and after allowing a discount according to the privilege purchase information to the potential customer the data receiving and processing unit of the respective point of sale registers the transaction and the amount of the allowed discount and sends the information relating to the transaction made and the amount of the allowed discount from the respective point of sale through the communication channel to the database of the central control unit of the association, and the member of the association having made available the personal data medium to the potential customer or a part thereof is paid a remuneration.

The technical effect that can achieved by means of the proposed method for promoting sales and the system for carrying out the same consists in the possibility to make a profit by a person just having made available in a personified manner the information on a possible discount for purchase of a commodity, rather than by one involved directly in the purchase and sale.

It is possible according to the present invention that the potential customer making a transaction at the point of sale is a member of the association. In this case, a discount according to the privilege purchase information contained on the data medium of the association member, as well as the respective remuneration are due to the association member who carried out said transaction.

Also, according to the invention it is possible that the remuneration is paid at the point of sale or the association of the points of sale.

It is advantageous according to the invention that a unique identification code for inputting into the central control unit database and a personal data medium is assigned to each association member.

It is possible according to the invention that the unique identification code is applied on the data medium as a barcode.

According to the invention an electronic discount card or a check book having at least one check are used as the data medium.

Also, according to the invention the Internet electronic facilities are used as the data medium.

The object set forth in the present invention is achieved by means of the system for promoting sales, comprising at least one data medium having a memory for data storing, a unit for reading information from said data medium, a first processor unit having a memory and an input means connected to an output means of the unit for reading information from said data medium, and an output means connected to an input means of the data display unit; said system according to the invention having at least one data receiving and processing unit for accommodating at the respective point of sale, and a central control unit for accommodating at the association of the points of sale, said central control unit comprising said data display unit, a data input unit, a data receiving unit and a second processor unit having a memory with a database storage unit, a first input means connected to an output means of the of the data input unit, a second input means connected to an output means of the data receiving unit, and an output means connected to an input means of the data display unit; each of said data receiving and processing units comprising said unit for reading information from the data medium, a data communication unit for communicating data to the central control unit, and said first processor unit having an input means connected to an output means of the data reading unit and an output means connected to an input means of the data receiving unit of the central control unit, said central control unit having an output means connected to the second input means of the second processor unit.

According to present invention the memory of the first processor unit is provided with a program containing information relating to the fact of transaction and the amount of discount for calculating the remuneration due to the association member.

Accordingly, the memory of the second processor unit is provided with a first program containing the unique identification code, and a second program containing information relating to the fact of transaction and the amount of discount for remunerating the association member.

According to the present invention the database storage unit is provided with a program containing the identification codes of each association member, the information relating to the privilege purchase and all transactions made..

The proposed system enables retailers, distributors of information and customers to achieve the economic efficiency in the field of manufacture and marketing of goods.

Further objects and advantages of the present invention will become obvious from the following detailed description of the method for promoting sales and the system suitable for carrying out said method, as well as from the accompanying drawing showing a schematic representation of the system according to the invention.

The method for promoting sales according to the invention comprises setting up an association of the points of sale by means of associating said points of sale, admitting natural and legal persons as the members of the association, forming a database of the central control unit of the association and making available to each association member an association member personal data medium. For example, an electronic discount card or the Internet electronic facilities, or a check book having at least one check may be used as the data medium. A unique identification code assigned to each association member and the privilege purchase information supplied by the association to a particular association member are entered into said personal data medium as a structural component thereof.

According to the invention the unique identification code is formed on the data medium, for example, as a barcode.

According to the present invention communication channels are formed between said central control unit and each of the points of sale, each of said points of sale is equipped with a data receiving and processing unit for receiving and processing of the information contained on each personal data medium.

According to the present invention each association member may at his own discretion make available his personal data medium or a part thereof to a potential customer. When carrying out a transaction at the associated point of sales, the potential customer must produce the data medium of a part thereof made available to him, whereupon the customer is allowed a discount according to the privilege purchase information contained on the data medium produced by him.

According to the present invention the potential customer making a transaction at the point of sale may be a member of the association. In this case, a discount according to the privilege purchase information contained on the data medium of the association member is due to the association member who carried out said transaction.

When carrying out a transaction at the point of sales the information in the form of the unique identification code relating to the association member who supplied the data medium, the information relating to the transaction made and the amount of the allowed discount are entered and-recorded into the data receiving and processing unit of the respective point of sale. Then, said information are communicated through the communication channel from the respective point of sale to the database of the central control unit of the association.

According to the present invention the association member who attracted a customer to the associated point of sale and made available to a potential customer his personal data medium or a part thereof, is paid a remuneration on the basis of said information, the amount of said remuneration depending on the value of purchase made by a potential customer.

The remuneration can be paid, for example, at the point of sale wherein the transaction has been made, or at the association of the points of sale, as well as at any other previously specified point.

If according to the claimed method a potential customer who made a transaction at the point of sale is an association member, the respective remuneration is paid to the association member who made the transaction.

Therefore, according to the present invention the proposed promotion sales of goods and services is carried out with the help of financially interested persons ensuring personified distribution of information on a commodity and/or a service within the sphere of their everyday contacts. It should be noted that a person distributing information on a commodity and/or a service can be a customer having already purchased a commodity or service at a discount, in which case he or she receives a remuneration if a new customer purchases any commodities or services following his or her recommendation. To create an incentive for the new customer the person giving recommendation is entitled to transfer the discount for the commodities and/or services being purchased to the new customer. In case the new customer purchases a commodity of a service the person giving recommendation receives a remuneration.

To implement the above-specified procedure it is proposed to set up a specialized body in the form of an association of the points of sale. A free union of natural and/or legal persons is meant as an association.

The main responsibility of said association is to work out "the rules of play" and to ensure execution thereof within the association, as well as to establish and develop the relations with the supplies and customers - members of the association on the basis of said rules.

An important feature of the proposed method is a personified character of the privilege purchase information (in this particular case, a discount) combined with the possibility to communicate said information in a personified manner, too, as well the obligations to pay a remuneration to a person having promoted a particular transaction of purchase and sale by transferring said privilege.

In fact, formation of said body results in emerging of a new "virtual trading space" within which the suppliers of goods and/or services have an opportunity to create mainly new relations with the customers, and the latter have an opportunity at least to take advantage of the new privileges for a purchase, and possibly to self-actualize as the high-paid experts giving recommendations.

As the association operates and the number of its members grows, more and more significance will be taking on the database supported by the association, wherein the information relating to the consumer and social "profile" of each of its members will be stored.

The embodiment of said method implies a considerable social effect caused both by emergence of the entire "branches" within the association and creation of workplaces, and by formation of a new relation model between a customer and a supplier, resembling by its form the existing "societies for protection of consumers' rights", and, in fact, being much more efficient.

The method according to the invention will be further described in more detail below with reference to the operation of the system for carrying out said method.

The method for promoting sales according to the invention can be put into practice, for example, by means of a system shown on the accompanying drawing. Said system comprises a central control unit 1, for accommodating at the association of the points of sale, at least one data receiving and processing unit 2 for accommodating at the respective point of sale, and at least one data medium (not shown) having a memory for data storing. The proposed system may comprise several data receiving and processing units 2₁...2ₙ. Each data receiving and processing unit 2 has a unit 3 for reading information from said data medium, a data communication unit 4 for communicating information to the central control unit 1 and a first processor unit 5 of the system according to the invention; said first processor unit 5 having an input means connected to an output means of the unit 3, and an output means connected to an input means of the unit 4.

The central control unit 1 has a data display unit 6, a data input unit 7, a data receiving unit 8 and a second processor 9 of the system according to the invention, said second unit 9 having a memory with a database storage unit 10 and a first input means connected to the output of the unit 7, a second input means connected to an output means of the unit 8, and an output means connected to an input means of the unit 6. Also, unit 8 of the central control unit 1 has an input means connected through a communication channel 11 to an output means of the unit 4 of the data receiving and processing unit 2. According to an embodiment of the invention the system may comprise several data receiving and processing units, and the central control unit 1 having the respective number of the data receiving units 8₁...8ₙ and the respective number of the communication channels 11₁...11ₙ.

Besides, the processor unit 9 has an input/output means connected and input/output means of the storage unit 10.

To enable paying of the remuneration to the association member at the associated point of sale, according to the invention the memory of the processor unit 5 is provided with a program containing information relating to the transaction made and the amount of discount. Alternatively, to enable paying the remuneration to the association member at the association the points of sale, the memory of the processor unit 9 is provided with a first program containing information sufficient to identify the association member, and a second program containing information relating to the transaction made and the amount of discount.

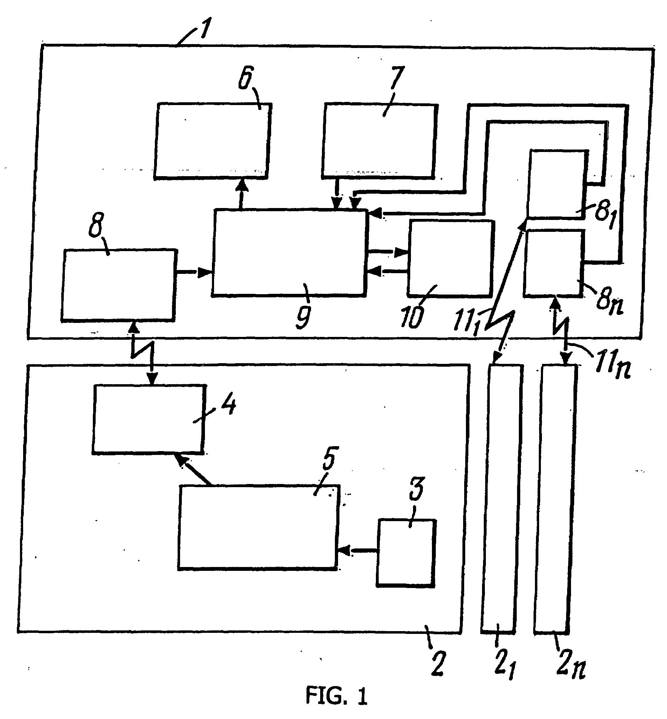

To ensure the promoted sales of commodities using to the method according to the invention all above-specified components of the system according to the invention may have any construction known from the art. For example, the data input unit 7 may be embodied either as a keyboard, or a "mouse", the data display unit 6, for example, either as a LCD, or a CRT monitor, the data receiving unit 8 and the data communication unit 4 - as a modem, the data reading unit 3 may be embodied as a scanning device. The method for promoting sales is carried out by means of a system shown on Fig. 1 in the following way.

### The Best Mode for Carrying out the Invention

First, a so called association of the points of sale is formed, the members of said association being, on one hand, legal persons, i.e. associated points of sale, and on the other hand, natural persons, i.e. customers admitted as the association members.

According to the invention in case of a purchase of goods at any associated point of sale the association allows a privilege for a purchase in the form of a discount for a fixed value to each member, provided the latter has produced a data medium or a part thereof, i.e. a structural component having the identification mark of the association.

Moreover, the association guarantees the payment of remuneration to an association member, provided the latter has proven his or her connection to the fact of a transaction in the form of a purchase of a commodity made at a particular associated point of sale by a potential customer advised to do so by said association member.

To carry our said procedure according to the invention at the step of setting up the association of the points of sale, including the retail points of sale, a database of the central control unit 1 of the association is formed, and the communication channels 11 to communicate with each associated point of sales are established. Next, each associated point of sale is provided with the data receiving and processing unit 2. A customer acquires the status of the association member, for example, by paying an entrance fee the amount of which may be equal to the amount of the privilege allowed for a purchase.

After entering the association of the points of sale an association member is provided with said data medium in the form of, for example, a magnetic or electronic discount card, or the Internet electronic facilities, or a check book. In case of a check book a check may be used as a part of the data medium. The identification data (namely, ID and/or medical data) of the association member and, possibly, the number of the data medium made available to the association member are inputted into the processor unit 9 through the data input unit 7. A unique identification code comprising information sufficient to identify an association member is assigned to each association member. All information relating to an association member is stored in the database storage unit 10 of the central control unit 1 of the association.

Thereafter, the unique identification code assigned to the association member is applied on the data medium made available or a part thereof.

The association member possessing positive information on the quality of goods offered at the associated points of sale, who had previously made a transaction (in the form of a purchase of a commodity) at an associated point of sale and received a discount following presentation of his personal data medium, gives personified and reasonable recommendations to the potential customers known to him or her within the sphere of his or her everyday contacts to make purchases at the associated points of sale. At the same time, the association member makes available to a potential customer his or her data medium or a part thereof in the form, for example, of a separate check, and guarantees that a potential customer will be a allowed a privilege for a purchase in the form of a discount from the value of the selected commodity. The potential customer chooses the desired commodity, inserts the data medium made available to him and provided with the unique identification code of the association member in the data reading unit 3 of the point of sale in question.

The data reading unit 3 processes the data medium reading the unique identification code of the association member and other data contained thereon. Then the data reading unit 3 via the processor unit 5 of the data receiving and processing unit 2, the data communication unit 4 for communicating date through the communication channel 11, data receiving unit 8 and the processor 9 of the central control unit 1 consecutively requests a validation of the unique identification code of the association member at the database storage unit 10, and receives an adequate answer.

In case the positive answer is received from the central control unit 1 the identification data of a commodity in question are inputted into the processor unit 5 of the data receiving and processing unit 2.

The processor unit 5 of the data receiving and processing unit 2 calculates the value of the transaction less the estimated discount and displays the value of the transaction, for example, on a paper carrier. Further, the potential customer covers the amount of the purchase. At the same time, the information relating to the fact of the transaction made and all transaction data are communicated through the data communication unit 4 for communicating date through the communication channel 11 to the data receiving unit 8, and further to the processor unit 9 and the database storage unit 10 for storing therein.

According to the present invention a program contained in the processor unit 5, which comprises information relating to the fact of the transaction and the amount of discount is used to calculate the amount of remuneration due to the association member whose unique identification code has been read, whereupon the remuneration is paid constituting a fixed percentage of the amount of the transaction made.

Next, all data relating to the transaction made, including those relating to the discount allowed and the amount of the remuneration of the association member, can be communicated to the storage unit 10 through the communication channel 11.

According to an embodiment of the present invention the information relating to the fact of the transaction and all transaction data can be sent through the communication channel 11 to the processor unit 9 having a program for calculating the amount of the remuneration constituting a fixed percentage of the amount of the transaction made, which is due to the association member whose unique identification code has been read, whereupon the remuneration is paid at the association of the points of sale.

Therefore, each association member receives a remuneration either at an associated point of sale, or at the association of the points of sale, provided a new potential customer has been attracted to associated point of sale. The amount of said remuneration may depend both on the value of the purchase made, and on a number of criteria developed by the association. As stated herein above, the potential customer necessarily receives a privilege for purchase in the form of a discount for the fixed value of the commodity selected.

According to the present invention the potential customer making a purchase at an associated point of sale may be an association member, in which case the association member receives a discount according to the privilege for purchase contained on the data medium produced by him, and an appropriate remuneration is paid.

### Industrial Applicability

The method for promoting sales and the system for carrying out the said method are applicable to accelerate the turnover of commodities and services, make available commodities and services at discount prices to a bigger number of customers, resulting in elevated economic efficiency in the field of manufacture and marketing of goods and services.

## Claims

1. Method for promoting sales comprising the following steps: making available to a potential customer a data medium containing privilege purchase information, processing said information at a point of sales in the course of a transaction made by said potential customer at said point of sales, allowing a discount according to the privilege purchase information contained on said data medium to said potential customer, **characterized in that** prior to making available to said potential customer said data medium containing said privilege purchase information an association of said points of sale is set up, natural and legal person are admitted as the members of said association, said association members database is formed within a central control unit of the association, a personal data medium is made available to each member of the association, communication channels are formed between said central control unit and each of the points of sale equipped with a data receiving and processing unit for receiving and processing the information contained on each personal data medium; said personal data medium is made available to said potential customer by each member of the association who supplies the personal data medium or a part there to the potential customer, said information processing at the point of sale in the course of said transaction made by said potential customer at said point of sales is carried out by inputting into said data receiving and processing unit of the respective point of sale the information contained on the personal data medium of a part thereof supplied to the potential customer, and after allowing a discount according to the privilege purchase information to the potential customer the data receiving and processing unit of the respective point of sale registers the transaction and the amount of the allowed discount and through the communication channel communicates the information relating to the transaction made and the amount of the allowed discount from the respective point of sale to the database of the central control unit of the association, and the member of the association having made available the personal data medium to the potential customer or a part thereof is paid a remuneration.

2. Method according to claim 1 **characterized in that** said potential customer having made a transaction at the point of sale is an association member, and the discount according to the privilege purchase information contained on the association member data medium, as well as the respective remuneration are due to the association member having made said transaction.

3. Method according to claims 1, 2 **characterized in that** said remuneration is paid at the point of sales.

4. Method according to claims 1, 2 **characterized in that** said remuneration is paid at the association of the points of sales.

5. Method according to claim 1 **characterized in that** said a unique identification code for inputting into the central control unit database and the personal data medium is assigned to each association member.

6. Method according to claim 5 **characterized in that** said unique identification code is applied on the data medium as a barcode.

7. Method according to claim 1 **characterized in that** an electronic discount card is used as said data medium.

8. Method according to claim 1 **characterized in that** the Internet electronic facilities are used as said data medium.

9. Method according to claim 1 **characterized in that** check book having at least one check is used as said data medium.

10. System for promoting sales, comprising at least one data medium having a memory for data storing, a unit for reading information from said data medium, a first processor unit having a memory, an input means connected to an output means of the unit for reading information from said data medium, and an output means connected to an input means of a data display unit, **characterized in that** said system comprises at least one data receiving and processing unit for accommodating at the respective point of sale, and a central control unit for accommodating at the association of the points of sale, said central control unit comprising said data display unit, a data input unit, a data receiving unit and a second processor unit having a memory with a database storage unit, a first input means connected to an output means of the of the data input unit, a second input means connected to an output means of the data receiving unit, and an output means connected to an input means of the data display unit; each of said data receiving and processing units comprising said unit for reading information from the data medium, a data communication unit for communicating data to the central control unit, and said first processor unit having an input means connected to an output means of the data reading unit and an output means connected to an input means of the data receiving unit of the central control unit having an output means connected to the second input means of the second processor unit.

11. System according to claim 10 **characterized in that** said memory of the first processor unit is provided with a program containing information relating to the fact of transaction and the amount of discount for calculating the remuneration due to the association member.

12. System according to claim 10 **characterized in that** said memory of the second processor unit is provided with a first program containing the unique identification code, and a second program containing information relating to the fact of transaction and the amount of discount for remunerating the association member.

13. System according to claim 10 **characterized in that** said database storage unit is provided with a program containing the identification codes of each association member, the information relating to the privilege purchase and all transactions made.
